Europäisches Patentamt

European Patent Office

Office européen des brevets

(11) Numéro de publication: **0 274 969 B1**

(12) **FASCICULE DE BREVET EUROPEEN**

(45) Date de publication de fascicule du brevet:
27.11.91

(51) Int. Cl.⁵: **H02K 3/12**, H02K 15/06,
H02K 15/04

(21) Numéro de dépôt: **87420342.5**

(22) Date de dépôt: **15.12.87**

(54) **Procédé de bobinage d'un stator de machine électrique tournante et dispositif pour la mise en oeuvre de ce procédé.**

(30) Priorité: **16.12.86 FR 8618455**

(43) Date de publication de la demande:
**20.07.88 Bulletin 88/29**

(45) Mention de la délivrance du brevet:
**27.11.91 Bulletin 91/48**

(84) Etats contractants désignés:
**DE ES FR GB IT**

(56) Documents cités:
DE-C- 332 820      FR-A- 1 429 849
FR-A- 1 465 068    GB-A- 631 303
GB-A- 2 076 710    GB-A- 2 126 797

(73) Titulaire: **VALEO EQUIPEMENTS ELECTRI-
QUES MOTEUR
2 Rue Andre Boulle
F-94000 Creteil(FR)**

(72) Inventeur: **Sadier, Jacques
15-17 rue St-Martin
F-58000 Nevers(FR)**

(74) Mandataire: **Bratel, Gérard et al
Cabinet GERMAIN & MAUREAU B.P. 3011
F-69392 Lyon Cédex 03(FR)**

Rank Xerox (UK) Business Services

## Description

La présente invention concerne un procédé et un dispositif de bobinage d'un stator de machine tournante électrique. Plus particulièrement, cette invention se rapporte aux bobinages du type dit "ondulé", pour machines tournantes électriques de relativement petite puissance, telles que les alternateurs équipant les véhicules automobiles.

Le stator d'un alternateur, tel qu'employé dans l'équipement des véhicules automobiles, est habituellement constitué par un empilage de tôles minces formant une couronne, dont la face intérieure est pourvue d'encoches recevant les bobinages des phases, généralement au nombre de trois. Dans les stators d'alternateurs de ce genre, les types de bobinages les plus couramment utilisés sont, d'une part, les bobinages constitués par des bobines fermées sur elles-mêmes et entrecroisées qui entourent les pôles, et d'autre part, les bobinages du type dit "ondulé", qui sont connus par exemple par les documents FR-A-1 532 522, FR-A-2 408 937 et FR-A-2 483 702.

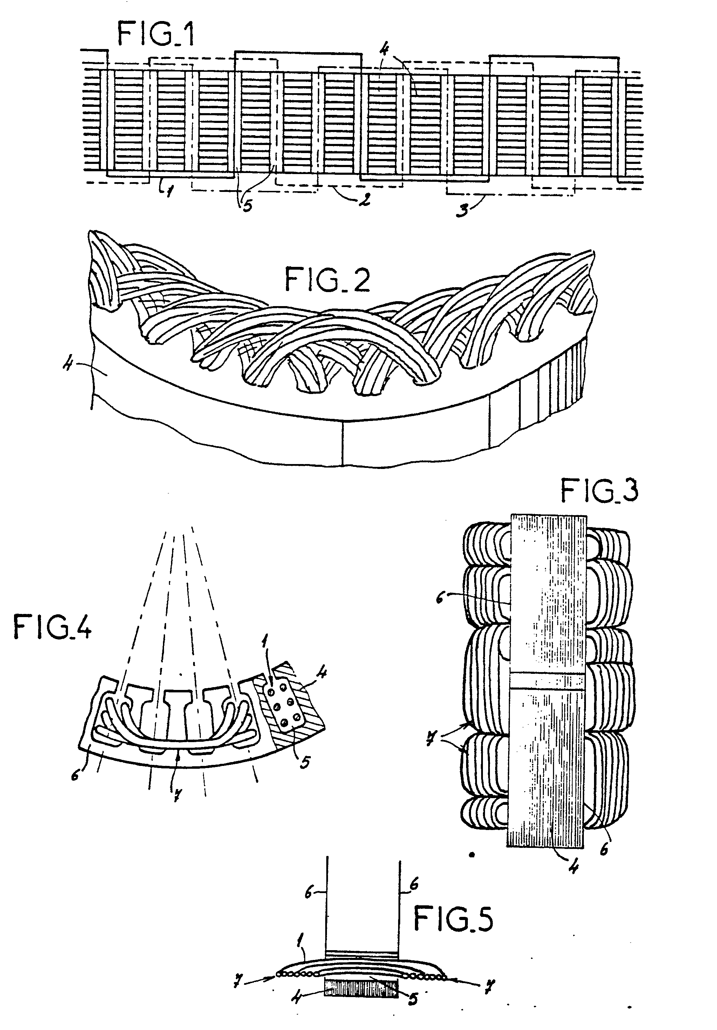

Un bobinage du type ondulé, auquel se rapporte plus particulièrement la présente invention, comprend des enroulements de phases formés de conducteurs qui successivement passent dans une première encoche du stator, rejoignent une deuxième encoche, passent dans cette deuxième encoche, parviennent à une troisième encoche distincte des précédentes et située au-delà, et ainsi de suite, de manière à former une bobine possédant une allure en "zig-zag" ou en ligne crénelée. La figure 1 du dessin schématique annexé rappelle en représentation développée ce principe connu, dans le cas d'un stator d'alternateur triphasé, les trois phases étant indiquées en 1,2 et 3, tandis qu'est mentionné en 4 l'empilage de tôles avec ses encoches 5.

Les bobinages du genre rappelé ci-dessus sont soit réalisés "in situ", c'est-à-dire dans le stator lui-même, par des machines spéciales, soit formés préalablement hors du stator, puis mis en place dans les encoches du stator, comme prévu dans le document FR-A-2 483 702 cité plus haut.

Dans ces cas, les bobines constituant les phases du stator sont composées de fils non rangés, et de plus les têtes de ces bobines, c'est-à-dire leurs parties situées hors des encoches, se chevauchent comme cela est bien montré sur la figure 2. Une telle configuration ne permet pas un refroidissement direct optimal des bobines par la ventilation de l'alternateur ; les bobines doivent donc être, en partie, refroidies par conduction entre les fils de ces bobines et l'empilage de tôles du stator.

On connaît par ailleurs, par les documents FR-A-1 429 849 et FR-A-1 465 068, des bobinages pour stators de machines tournantes électriques qui ne sont pas des bobinages du type ondulé, mais dans lesquels il est prévu un certain rangement des fils ou conducteurs des enroulements de phase. Ceci signifie que, dans les têtes de bobines, c'est-à-dire dans les parties des enroulements situées hors des encoches, les conducteurs sont disposés en nappes étalées, les fils étant rangés côte à côte, et que, dans les parties des enroulements situées à l'intérieur des encoches, les conducteurs se présentent comme plusieurs couches superposées de fils parallèles juxtaposés. Le rangement des fils améliore le remplissage des encoches, ainsi que le refroidissement des têtes de bobines. Un problème est, toutefois, de réaliser ce rangement des fils au cours de la fabrication.

L'invention se propose de fournir un procédé qui permet d'obtenir un bobinage de type ondulé dans lequel les fils sont correctement rangés, ce procédé permettant de former le bobinage et de le mettre en place dans le stator d'une manière économique, simple, sûre et garantissant le rangement souhaité pour les fils, aussi bien dans les têtes de bobines qu'à l'intérieur des encoches.

A cet effet, l'invention a essentiellement pour objet un procédé de bobinage d'un stator de machine tournante électrique de relativement petite puissance, telle qu'alternateur équipant un véhicule automobile, avec un bobinage du type "ondulé" dans lequel il est prévu un rangement des fils de tous les enroulements de phase dans les têtes de bobines, c'est-à-dire les parties des enroulements de phases situées hors des encoches, ces parties formant des nappes étalées avec fils rangés côte à côte, et/ou dans les parties des enroulements de phase situées à l'intérieur des encoches, ces dernières parties se présentant comme plusieurs couches superposées de fils parallèles juxtaposés, le procédé comportant une formation préalable du bobinage hors du stator suivie d'une mise en place de ce bobinage dans les encoches du stator, et ce procédé étant caractérisé en ce que, successivement

- hors du stator, on conforme en "zig-zag" un fil électriquement conducteur, en réalisant sur le fil des "créneaux" ayant des hauteurs croissantes ou décroissantes et des largeurs déterminées ;

- on sectionne ce fil en tronçons dont la longueur correspond à celle d'un enroulement de phase du stator ;

- on enroule chaque tronçon de fil, en plusieurs tours, sur un support provisoire, en superposant les créneaux de hauteurs croissantes ou décroissantes ;

- on introduit le support provisoire dans l'empilage de tôles du stator, et on transfère le tronçon de fil depuis ce support provisoire vers les encoches du stator.

L'invention consiste, ainsi, à mettre en forme de façon particulière un fil, hors du stator, puis à transférer le fil sur le stator de telle sorte que les parties de fil voisines viennent, notamment au niveau des têtes des bobines et aussi dans ses encoches, se placer naturellement les unes a côté des autres, pour former les nappes étalées et les couches superposées recherchées dans le rangement des fils défini plus haut.

Le fil peut être notamment conformé avec des séries successives de créneaux, chaque série comprenant des créneaux en nombre prédéterminé ayant tous la même hauteur, et la hauteur de ces créneaux étant croissante ou décroissante d'une série à la suivante, chaque série correspondant à une spire de la bobine complète. La différence de hauteur des créneaux entre deux séries successives, de chaque côté, est de préférence sensiblement égale à l'épaisseur du fil, de manière à obtenir finalement une juxtaposition exacte des parties de fil, dans les têtes de bobines.

De plus, en vue de l'obtention du rangement correct des fils à l'intérieur des encoches, on prévoit avantageusement, dans la conformation initiale en "zig-zag", des groupes successifs de créneaux ayant des largeurs de créneaux distinctes, déterminées de telle manière que les parties de fils soient exactement juxtaposées dans chacune des couches de fils superposées prenant place finalement dans les encoches du stator.

Plus particulièrement, dans le cas simple où chaque couche de fils est formée avec deux parties de fils juxtaposées dans chaque encoche du stator, on forme successivement, pour l'obtention de chaque couche, un premier groupe de créneaux de hauteur déterminée et de largeur légèrement inférieure à l'entraxe de deux encoches consécutives destinées à une même phase, puis un deuxième groupe de créneaux de même hauteur que la précédente mais de largeur légèrement supérieure à l'entraxe précité, ou vice-versa, de telle sorte que les deux portions de fil, correspondant respectivement à ces deux groupes de créneaux, suivent des trajets parallèles, sans croisement. Le même principe s'applique, bien entendu, à la formation de toutes les couches de fil d'un même enroulement de phase.

Le processus décrit ci-dessus de formage du fil, et de coupe à la longueur voulue, s'applique à tous les enroulements de phases. Les tronçons de fils correspondant aux différentes phases sont insérés successivement dans les encoches du stator, en passant toujours par l'intermédiaire d'un support provisoire constituant une sorte de "faux rotor". Si nécessaire, un compactage du fil en fond d'encoches est réalisé lors de son transfert final dans le stator, pour éviter que dans la dernière phase mise en place, certaines parties de fil ne soient pas introduites correctement dans les encoches.

Le dispositif selon l'invention, destiné à la mise en oeuvre du procédé de bobinage défini ci-dessus, comprend en combinaison :
- des moyens d'amenée du fil électriquement conducteur à conformer ;
- des moyens pour la conformation de ce fil en "zig-zag", formant des créneaux de hauteurs croissantes ou décroissantes et de largeurs prédéterminées ;
- des moyens de coupe du fil conformé en "zig-zag", pour sa séparation en tronçons dont la longueur correspond à celle d'un enroulement de phase ;
- des moyens pour la reprise de chaque tronçon de fil coupé et pour son enroulement en plusieurs tours sur une roue réceptrice, constituant pour ce tronçon de fil un support provisoire ;
- des moyens pour l'introduction de la roue réceptrice, garnie d'un tronçon de fil, à l'intérieur de l'empilage de tôles du stator, et pour le transfer du tronçon de fil depuis la roue réceptrice vers les encoches du stator.

Les moyens pour la conformation du fil en "zig-zag" comprennent, dans une forme de réalisation du dispositif objet de l'invention, essentiellement une chaîne sans fin liée à des moyens d'entraînement pas à pas, les maillons de cette chaîne sans fin comportant sur leurs faces extérieures des gabarits sensiblement rectangulaires dont l'ensemble correspond à la totalité des créneaux à réaliser pour la formation d'un enroulement de phase, des moyens étant prévus pour appliquer le fil contre les bords de ces gabarits au fur et à mesure de l'amenée du fil vers ladite chaîne sans fin. Chaque maillon peut comporter un gabarit unique, correspondant à un créneau à réaliser, la chaîne sans fin possédant toutefois une zone inactive, permettant de passer de la formation d'un enroulement de phase à la formation de l'enroulement de phase suivant en laissant, entre deux enroulements successifs, une certaine longueur de fil sans créneaux, qui est nécessaire aux branchements électriques de ces enroulements de phases dans le stator achevé.

Le dispositif comprend encore, dans la zone où le fil est amené vers la chaîne sans fin, et de part et d'autre de cette chaîne, un premier galet formeur déplaçable perpendiculairement au sens d'avance de la chaîne, et un second galet formeur déplaçable parallèlement au sens d'avance de la chaîne. Ces galets formeurs sont commandés, par exemple au moyen de vérins, de manière à appliquer le fil contre les bords des gabarits portés par les maillons de la chaîne sans fin, pour constituer des créneaux prenant exactement la forme des gabarits. Il est à noter que l'arrivée du fil vers la chaîne sans fin s'effectue, de préférence, dans une zone de changement de direction de cette chaîne, de telle sorte que pendant la formation d'un créneau sur un gabarit porté par un maillon de la chaîne sans fin, le maillon suivant de cette chaîne forme un angle par rapport au plan du maillon précédent, et permet ainsi le libre passage des galets formeurs qui coopérent alors avec le gabarit du maillon précédent.

Selon une autre caractéristique du dispositif objet de l'invention, les moyens pour la reprise de chaque tronçon de fil coupé et pour son enroulement sur une roue réceptrice comprennent, d'une part, des guides pour une amenée tangentielle des tronçons de fils vers la roue réceptrice et, d'autre part, des moyens pour l'entraînement en rotation de ladite roue réceptrice. Au cours de cet entraînement en rotation, le tronçon de fil coupé, correspondant à un enroulement de phase, est transféré vers la roue réceptrice sur laquelle il est enroulé en plusieurs tours, pour constituer un enroulement qui est la préfiguration d'un enroulement de phase définitif du stator à bobiner. Des presseurs mobiles peuvent être disposés, en outre, de part et d'autre de la zone où les tronçons de fil atteignent la roue réceptrice, pour participer à la mise en place du fil sur cette roue avec rangement des fils dans les parties correspondant aux têtes de bobines.

Pour remplir parfaitement ses fonctions de réception des tronçons de fil et de transfert final de ces tronçons de fil vers l'empilage de tôles du stator, la roue réceptrice doit revêtir une configuration particulière :

La roue réceptrice doit, notamment, posséder un diamètre extérieur légèrement inférieur au diamètre intérieur du stator à bobiner, et une épaisseur sensiblement égale à celle du stator à bobiner, la périphérie de cette roue réceptrice étant pourvue d'encoches dont le pas circonférentiel correspond au pas des encoches affectées à l'une des phases du stator à bobiner, tandis que la profondeur des encoches de la roue réceptrice est prévue de manière à permettre l'empilage, à l'intérieur de ces encoches, de toutes les spires du tronçon de fil enroulé en plusieurs tours sur cette roue réceptrice. Au cours du prélèvement du tronçon de fil, les encoches de la roue réceptrice reçoivent les parties correspondantes du fil, chaque encoche de cette roue réceptrice étant finalement chargée du nombre de parties de fil nécessaires à la constitution d'un enroulement de phase du stator.

Plus particulièrement, les encoches de la roue réceptrice possèdent une forme symétrique par rapport à un plan médian perpendiculaire à l'axe de cette roue réceptrice, avec de part et d'autre du plan médian des parties s'élargissant de préférence selon un profil en "V" et débouchant, respectivement, sur les deux faces d'extrémité de ladite roue réceptrice. Les parties élargies des encoches forment des dégagements qui permettent aux créneaux du bobinage en cours de formation de s'empiler radialement, en formant des "cordes" de longueur constante bien que certains de ces créneaux soient situés plus près de l'axe alors que d'autres se trouvent plus éloignés de l'axe de la roue réceptrice. Les parties élargies des encoches de la roue réceptrice peuvent notamment posséder, sur les faces d'extrémité de cette roue, des débouchés avec un contour ovale ou en forme de poire ou de goutte. Une telle conformation des encoches permet, dans l'opération finale de réalisation et de mise en place de chaque bobinage de phase, une extraction facile et sans coincement des spires, bien alignées radialement, pour leur report dans les encoches du stator, sans déformation des parties qui ne seront pas emprisonnées dans ces encoches et qui devront former les nappes étalées des têtes de bobines.

Un manipulateur, tel qu'à bras oscillant, est utilisable pour transférer la roue réceptrice, garnie de l'enroulement correspondant à une phase, vers l'empilage de tôles du stator devant recevoir cet enroulement, le manipulateur pouvant simultanément amener une autre roue réceptrice identique, qui recevra un nouvel enroulement de phase. L'opération finale de transfert de chaque enroulement depuis le support provisoire vers le stator est réalisable au moyen d'organes expulseurs, tels que doigts ou crochets ou lames, animés d'un mouvement rectangulaire.

De toute façon, l'invention sera mieux comprise à l'aide de la description qui suit, en référence au dessin schématique annexé montrant un stator bobiné de machine tournante électrique illustrant le procédé de bobinage selon l'invention pour un tel stator et représentant une forme de réalisation du dispositif pour la mise en oeuvre de ce procédé, tout ceci évidemment à titre d'exemples non limitatifs :

Figure 1 (déjà citée) est une vue très schématique, sous forme développée, d'un bobinage du type "ondulé" ;

Figure 2 (déjà citée) est une vue partielle, en perspective, d'un stator avec bobinage ondulé à fils non rangés ;

Figure 3 est une vue de côté d'un stator avec bobinage à fils rangés ;

Figure 4 est une vue en bout partielle du stator de figure 3, avec partie en coupe ;

Figure 5 est une vue partielle en coupe de ce stator, le plan de coupe traversant longitudinalement l'une des encoches ;

Figure 6 représente de façon générale, sous forme de vue développée à plat, un tronçon de fil conformé en "zig-zag" selon le procédé de l'invention, et correspondant à un enroulement de phase ;

Figure 7 montre avec plus de précision une partie de ce tronçon de fil, avec représentation superposée de deux groupes de créneaux ;

Figure 8 est un diagramme illustrant les particularités des créneaux de ce tronçon de fil concernant leurs largeurs, pour les spires successives de l'enroulement de phase ;

Figure 9 est une vue d'ensemble en perspective, très schématique, du dispositif selon l'invention ;

Figure 10 est une vue de côté partielle de la chaîne sans fin du dispositif représenté à la figure 9 ;

Figures 11, 12 et 13 sont des schémas illustrant le fonctionnement du dispositif des figures 9 et 10, et plus particulièrement la formation des créneaux ;

Figure 14 est une vue de face de la roue réceptrice, garnie de fil ;

Figure 15 est une vue partielle en coupe, et en représentation développée, de cette roue réceptrice garnie de fil ;

Figure 16 est une vue très schématique, en coupe, des moyens de transfer du fil depuis la roue réceptrice vers l'empilage de tôles du stator.

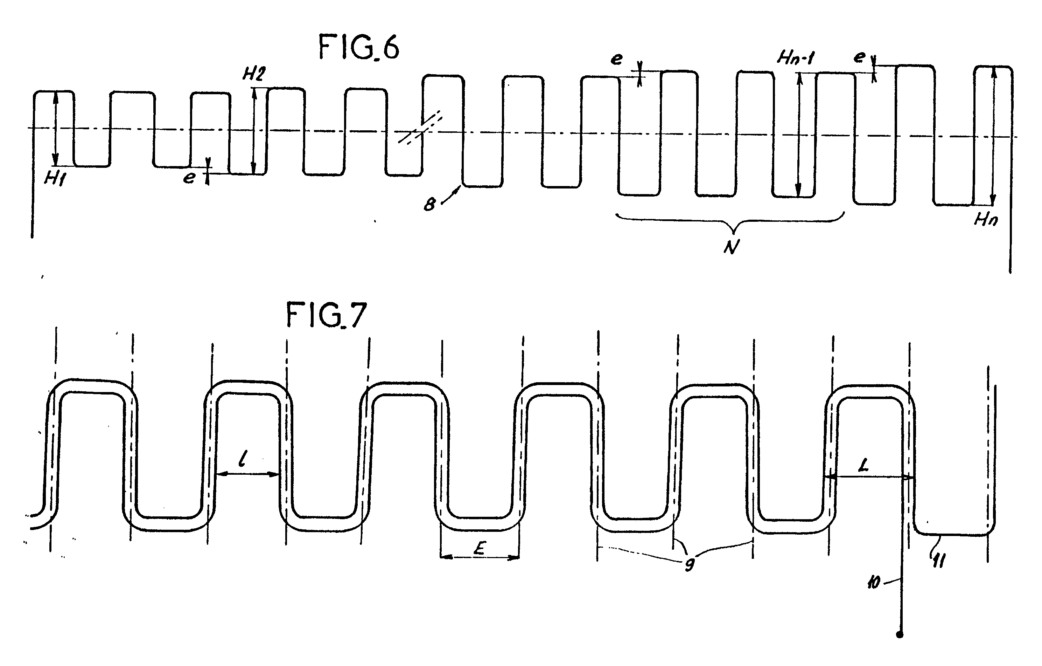

Les figures 3 à 5 représentent un stator d'alternateur triphasé, formé par un empilage de tôles annulaires 4 avec des encoches 5 ouvertes vers l'axe et vers les faces d'extrémité 6 qui reçoivent les bobinages des trois phases appartenant au type "ondulé" dont le principe a été précédemment rappelé en référence à la figure 1, ces figures montrant seulement un enroulement de phase 1 pour plus de clarté. Les têtes de bobines, c'est-à-dire les parties de l'enroulement de phase 1 situées hors des encoches 5 de part et d'autre de l'empilage de tôles 4, forment des nappes étalées 7, relativement plates, résultant de la disposition côte à côte d'un certain nombre de parties de fils. De plus, comme cela apparaît sur la figure 4 notamment à droite, les parties de fils situées à l'intérieur des encoches 5 possèdent un rangement régulier, ces parties de fils se présentant comme plusieurs couches superposées, avec des fils parallèles juxtaposés dans chaque couche. A titre d'exemple, il peut exister trois couches superposées avec, pour chaque couche, deux parties de fil juxtaposées à l'intérieur de chaque encoche 5.

Pour obtenir que les parties de fils viennent se placer ainsi côte à côte, de manière bien rangée, aussi bien à l'intérieur des encoches 5 que pour former les nappes étalées 7 hors des encoches, chaque enroulement de phase 1, 2 ou 3 est réalisé comme un tronçon de fil électriquement conducteur conformé en "zig-zag", selon le principe illustré par la figure 6 :

Le tronçon de fil 8 en "zig-zag" est subdivisé, dans le sens de sa longueur, en n séries successives de créneaux, chaque série comprenant le nombre N de créneaux correspondant à un tour complet d'enroulement du fil (à ce sujet, la figure 6 est simplifiée et n'indique pas le nombre réel de créneaux). A l'intérieur de chaque série de N créneaux, tous les créneaux sont exactement de même hauteur. La hauteur des créneaux est croissante ou décroissante d'une série à la suivante, depuis une extrémité du tronçon de fil 8 jusqu'à son autre extrémité, ce qui donne à l'ensemble une allure "étagée". Ainsi, la première série de créneaux possède une hauteur minimale $H1$, la deuxième série possède une hauteur légèrement supérieure $H2$, etc..., l'avant-dernière série de créneaux possède une hauteur $Hn-1$, et la dernière série possède une hauteur maximale $Hn$. L'écart de hauteur des créneaux, entre deux séries successives, est également réparti de chaque côté, où il représente sensiblement une épaisseur de fil e. L'on obtient de cette manière, qu'à chaque tour d'enroulement les parties de fils se placent, au niveau des têtes de bobines, à côté des parties de fil correspondantes appartenant à la spire d'enroulement précédente.

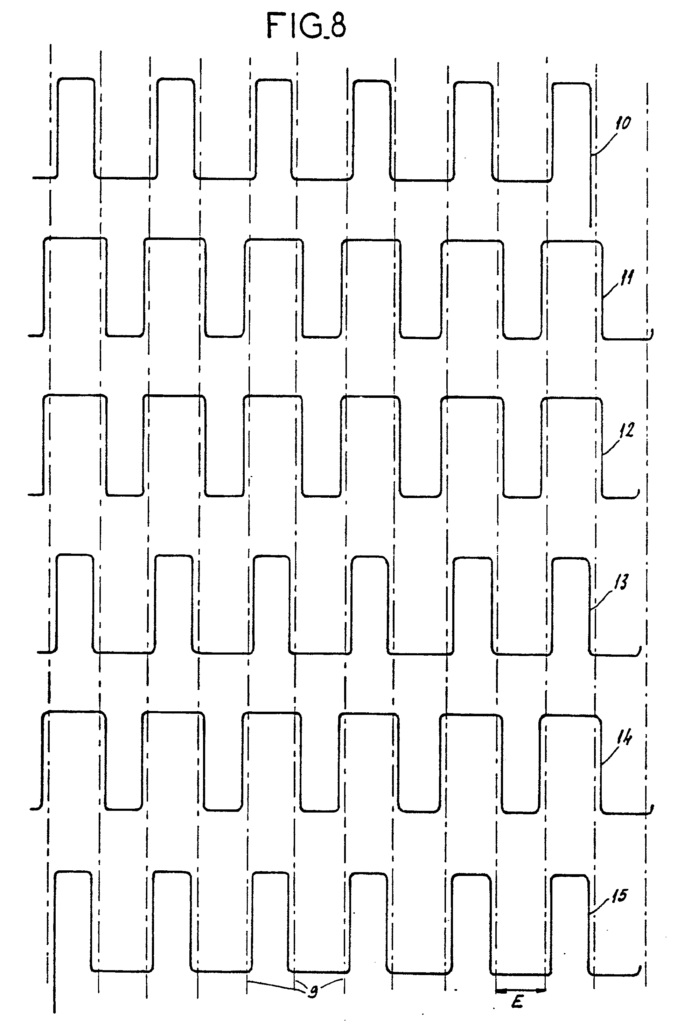

Pour obtenir en outre le rangement correct des fils à l'intérieur des encoches 5, il convient de respecter des relations précises dans les largeurs des créneaux, comme l'illustrent les figures 7 et 8 :

La figure 7 montre ainsi en superposition deux groupes de créneaux, correspondant à l'une des couches de fils logées dans les encoches, les lignes en traits mixtes désignées par 9 symbolisant les axes des encoches 5 (au nombre de douze pour chaque phase dans l'exemple particulier ici considéré). E désigne ici l'entraxe de deux encoches 5 consécutives destinées à une même phase.

Dans le premier groupe de créneaux, au nombre de six et correspondant à une première spire complète 10 de l'enroulement, tous les créneaux possèdent une largeur 1 légèrement inférieure à l'entraxe E des encoches. Au contraire, dans le deuxième groupe de créneaux, également au nombre de six et correspondant à la spire suivante 11, la largeur L de tous les créneaux est légèrement supérieure à l'entraxe E. Les deux portions de fil 10 et 11, correspondant respectivement à ces deux groupes de créneaux, suivent ainsi des trajets parallèles, sans se croiser. Pour que les deux portions de fil 10 et 11 soient exactement juxtaposées, la largeur 1 des créneaux du premier groupe est prévue sensiblement égale à l'entraxe E diminué de l'épaisseur e du fil, tandis que la largeur L des créneaux du deuxième groupe est prévue sensiblement égale à l'entraxe E augmenté de l'épaisseur e du fil.

La figure 8 illustre la généralisation de ce principe à toutes les couches superposées de parties de fil, en prenant pour exemple une réalisation avec trois couches superposées. On pourra donc distinguer, dans ce cas, six groupes successifs de créneaux qui correspondent à six portions de fil, numérotées de 10 à 15, ou encore à six spires lorsque le bobinage est formé et enroulé.

Ces six groupes de créneaux est représentés les uns au dessous des autres, avec repérage de leurs dispositions par rapport aux axes 9 des encoches de la même manière que sur la figure 7. Pour la bonne compréhension de la figure 8, on notera que c'est l'extrémité gauche de chaque portion de fil qui se raccorde à l'extrémité droite de la portion de fil suivante, représentée immédiatement au dessous. On peut encore remarquer certaines particularités vers ces extrémités, correspondant au passage d'une couche à une autre dans le bobinage définitivement mis en place, ainsi qu'aux branchements électriques de l'enroulement de phase. Dans l'exemple ici considéré, on forme ainsi au total, 12 x 6 = 72 parties de fil parallèles, prévues pour prendre place dans douze encoches avec, dans chaque encoche du stator, six parties de fil parallèles réparties en trois couches superposées.

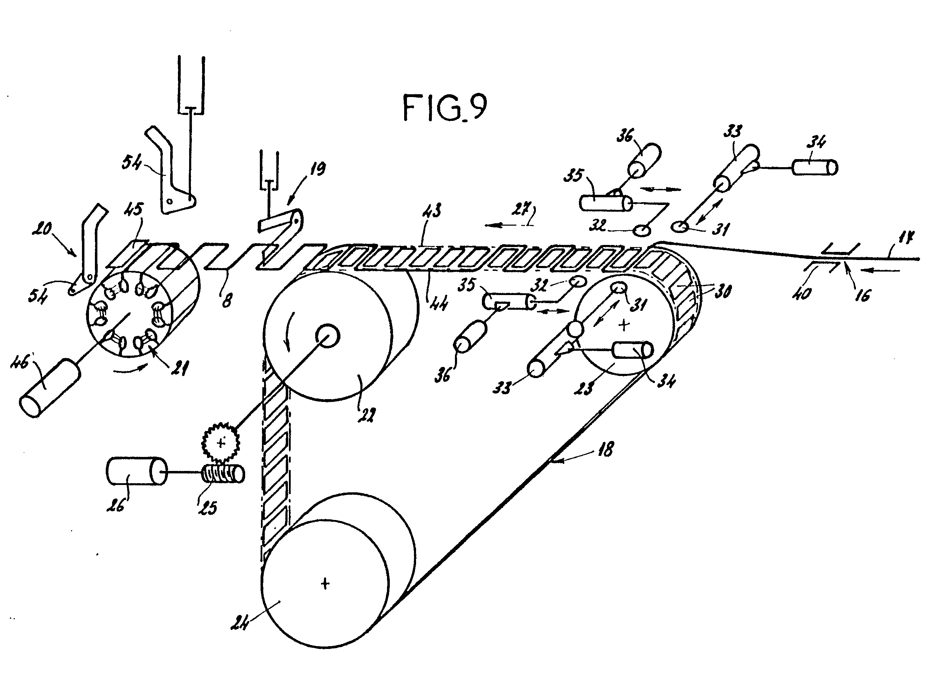

La figure 9 montre, dans son ensemble, un dispositif qui permet la conformation en "zig-zag" du fil, telle qu'illustrée par les figures précédentes, puis la préparation de ce fil pour son insertion dans le stator. Le dispositif comprend notamment : des moyens 16 pour l'amenée du fil 17, provenant de moyens de dévidage non représentés ; une chaîne sans fin 18 sur laquelle le fil 17 est conformé en "zig-zag" ; des moyens de coupe 19 qui séparent ce fil 17, une fois conformé, pour obtenir les tronçons de fil 8 déjà décrits plus haut, correspondant chacun à un enroulement de phase ; des moyens 20 de reprise des tronçons de fil 8 et d'insertion de ces tronçons de fil 8 sur une roue réceptrice 21.

La chaîne sans fin 18, décrivant un trajet de forme sensiblement triangulaire, passe sur une roue d'entraînement 22, sur un barbotin 23 et sur une autre roue 24. La roue d'entraînement 22 est accouplée, par l'intermédiaire d'un mécanisme de transmission 25, à un moteur 26 qui commande une avance pas à pas de la chaîne sans fin 18. La partie utile de cette chaîne 18 est constituée par le brin supérieur sensiblement horizontal s'étendant entre le barbotin 23 et la roue d'entraînement 22, où l'avance de la chaîne 18 s'effectue de façon incrémentale dans le sens indiqué par une flèche 27.

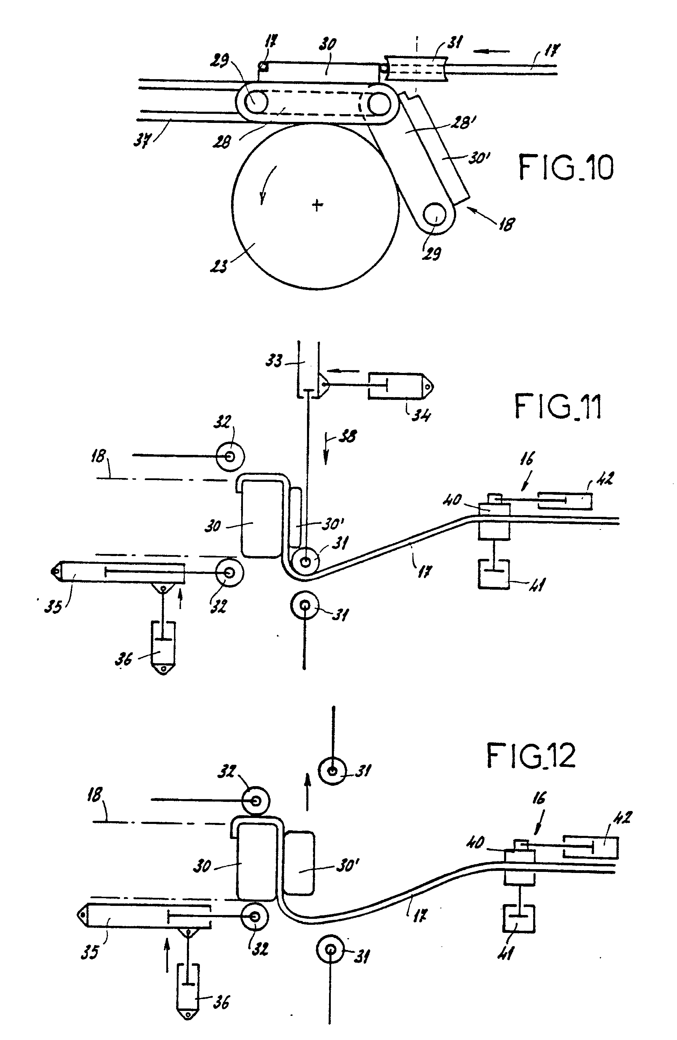

La longueur totale de la chaîne sans fin 18 correspond sensiblement à la longueur d'un enroulement de phase, conformé en "zig-zag". Comme le montre aussi la figure 10, la chaîne 18 est formée par des maillons 28 articulés les uns aux autres suivant des axes 29. Chaque maillon 28 comporte sur sa face extérieure une partie en relief 30, de forme rectangulaire avec angles arrondis, constituant un gabarit pour la formation d'un créneau. L'ensemble des maillons 28 avec leurs gabarits 30 correspond ainsi à la totalité des créneaux à réaliser pour la formation d'un enroulement de phase, les dimensions longitudinale et transversale de chaque gabarit 30 étant déterminées en fonction de la hauteur et de la largeur particulières du créneau correspondant.

Pour appliquer le fil 17 contre les bords des gabarits 30, le dispositif comprend encore, de part et d'autre de la chaîne 18 dans la région du barbotin 23, un premier galet formeur 31 et un second galet formeur 32. Le premier galet formeur 31 est déplaçable perpendiculairement au sens d'avance 27 de la chaîne 18, en étant commandé par un vérin 33 ; ce galet formeur 31 est en outre soumis à l'action d'un presseur 34 agissant suivant le sens d'avance 27 de la chaîne 18. Le second galet formeur 32 est déplaçable parallèlement au sens d'avance 27 de la chaîne 18, en étant commandé par un vérin 35 ; ce galet formeur 32 est aussi soumis à l'action d'un presseur 36 agissant perpendiculairement au sens d'avance 17 de la chaîne 18.

Les deux premiers galets formeurs 31, situés de part et d'autre de la chaîne sans fin 18, sont commandés alternativement pour appliquer le fil 17 contre les bords des gabarits 30 orientés perpendiculairement au sens d'avance 27 de la chaîne 18. Comme le montre la figure 10, les plans du maillon 28 dont le gabarit 30 est en position de travail, et du maillon suivant 28' avec son gabarit 30', forment un angle assez important de telle sorte que le maillon 28' ne constitue aucune gêne pour le passage des galets formeurs 31. Ceci est obtenu en situant l'arrivée du fil 17 vers la chaîne sans fin 18 dans la zone du barbotin 23, et en prévoyant en outre, dans cette zone, des guides appropriés 37 pour les maillons 28, 28', imposant aux axes 29 une trajectoire particulière.

Les deux autres galets formeurs 32 sont commandés alternativement pour appliquer le fil 17 contre les bords des gabarits 30 orientés parallèlement au sens d'avance 17 de la chaîne sans fin 18.

Les figures 11, 12 et 13 illustrent, plus précisément, le mode de formation des créneaux sur le dispositif décrit précédemment :

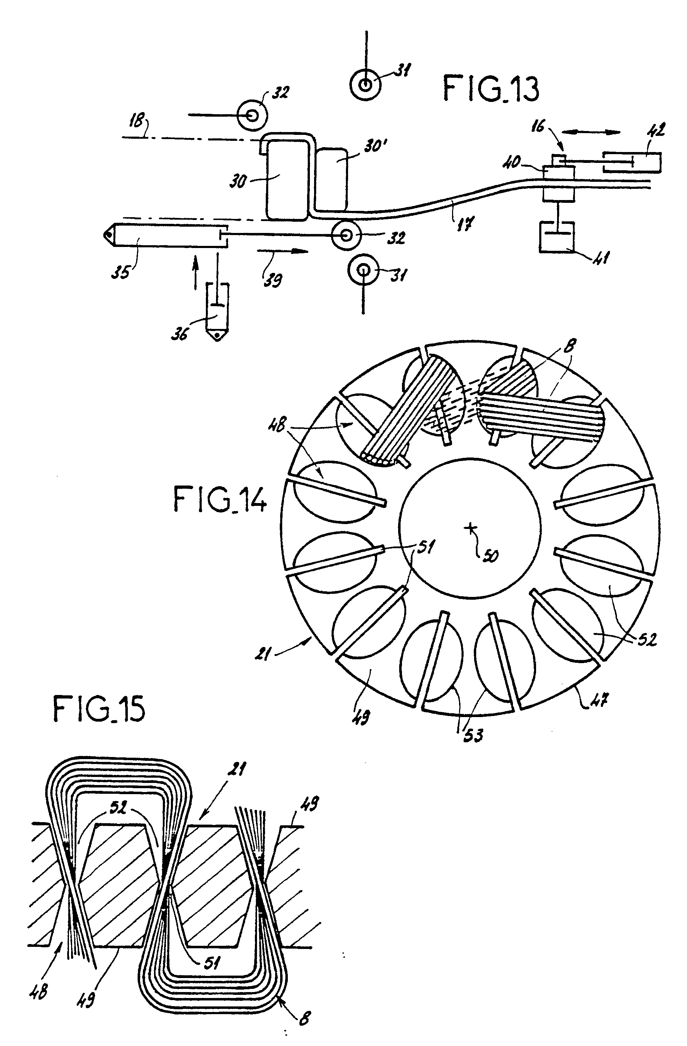

La figure 11 montre l'un des galets formeurs 31 en cours de travail, se déplaçant suivant la flèche 38 pour appliquer le fil 17 contre le bord postérieur du gabarit 30 porté par un maillon. Ce galet formeur 31 est ensuite ramené en arrière, comme le montre la figure 12, et la chaîne sans fin 18 est alors avancée d'un pas, de telle sorte que le gabarit 30' porté par le maillon suivant prend la place occupée précédemment par le gabarit 30. Dans l'étape suivante, illustrée par la figure 13, l'un des galets formeurs 32 est déplacé suivant la flèche 39, pour appliquer le fil 17 contre un bord du gabarit 30', parallèle au sens d'avance de la chaîne 18. Le même processus est ensuite effectué en faisant intervenir l'autre galet formeur 31, pour ramener le fil de l'autre côté de la chaîne 18, puis en faisant intervenir l'autre galet formeur 32.

Les figures 11 à 13 montrent, en outre, les moyens d'amenée 16 du fil 17, qui comprennent une pince mobile 40 dont l'ouverture et la fermeture sont provoqués par des moyens de commande 41, et dont le déplacement, parallèlement au fil 17, est commandé par un vérin 42. La pince 40 est serrée sur le fil 17 et déplacée vers l'avant en coïncidence avec chaque avance incrémentale de la chaîne sans fin 18 entraînée pas à pas. Cette pince 40 reste ouverte pendant le reste du temps.

En conformant successivement le fil 17 sur tous les gabarits 30 de la chaîne sans fin 18, on obtient un fil en "zig-zag", correspondant à un enroulement de phase. La chaîne sans fin 18 possède toutefois, comme le montre la figure 9, une zone inactive 43 permettant de passer de la formation d'un enroulement de phase à la formation de l'enroulement de phase suivant en laissant, entre deux enroulements successifs, une certaine longueur de fil rectiligne 44, sans créneaux.

Le fil conformé quitte la chaîne sans fin 18 au voisinage de la roue d'entraînement 22 de cette chaîne. Il parvient alors aux moyens de coupe 19, qui le sectionnent vers le milieu de chaque longueur de fil rectiligne 44. Le fil est ainsi séparé en des tronçons de fil 8, correspondant chacun à un enroulement de phase, avec des extrémités prévues pour les branchements électriques. Ces extrémités peuvent être ici mises en forme et dénudées par des moyens non représentés.

Au-delà des moyens de coupe 19, les tronçons de fil 8 convenablement dirigés par des guides 45 parviennent tangentiellement vers la roue réceptrice 21, entraînée en rotation par des moyens moteurs 46, pour être transférés sur cette roue réceptrice 21.

Les figures 14 et 15 montrent la roue réceptrice 21, garnie d'un tronçon de fil 8 transféré sur cette roue (tronçon de fil représenté partiellement sur la figure 14). La roue réceptrice 21 revêt l'aspect d'un corps en forme générale de couronne, délimité extérieurement par une surface cylindrique 47, dont le diamètre est légèrement inférieur au diamètre intérieur du stator. A sa périphérie, la roue réceptrice 21 présente des encoches 48 qui débouchent sur la surface cylindrique 47 et aussi sur les deux faces d'extrémité annulaires 49. Le nombre des encoches 48 de la roue réceptrice 21, et le pas angulaire de ces encoches 48, correspondent respectivement au nombre et au pas angulaire des encoches 5 du stator affectées à l'un des enroulements de phases 1, 2 ou 3 (soit douze encoches 48 si l'on se réfère toujours au même exemple).

Chaque encoche 48 de la roue réceptrice 21 possède une forme symétrique par rapport à un plan médian perpendiculaire à l'axe 50 de cette roue réceptrice 21. La partie centrale 51 de chaque encoche 48 possède la forme d'une fente relativement étroite ; de part et d'autre de cette partie centrale 51, l'encoche 48 comporte deux parties symétriques 52 qui s'élargissent progressivement selon un profil en "V". Ces parties élargies 52 des encoches 48 possèdent, sur les faces d'extrémité 49 de la roue réceptrice 21, des débouchés avec un contour 53 de forme ovale ou similaire, telle qu'en forme de poire ou de goutte d'eau.

Lors du transfert d'un tronçon de fil 8 vers la roue réceptrice 21, les parties de ce tronçon de fil orientées transversalement s'introduisent, les unes après les autres, dans les encoches 48 de ladite roue réceptrice 21. Le transfert complet du tronçon de fil 8 nécessite plusieurs tours de rotation de la roue réceptrice 21, le fil s'enroulant ainsi en plusieurs spires. Des parties de fil se retrouvent ainsi superposées, et en quelque sorte "empilées" dans les encoches 48, comme le montrent les figures 14 et 15 qui expliquent le rôle des parties élargies 52 des encoches 48 : ces parties élargies 52 autorisent une déformation légère des créneaux, allant en croissant vers l'axe 50 et permettant de compenser le resserrement des encoches 48 vers l'axe 50, donc d'admettre tous les créneaux dont le pas est constant. Sur la figure 15 apparaît, en outre, le décalage entre les spires consécutives, sensiblement égal à l'épaisseur du fil, qui est obtenu dans la région des sommets des créneaux à l'extérieur des encoches 48, et qui résulte de la hauteur progressivement croissante ou décroissante de ces créneaux sur le tronçon de fil 8 précédemment formé.

En se reportant à nouveau à la figure 9, on remarque encore deux presseurs mobiles 54 disposés de part et d'autre de la zone de transfert des tronçons de fil 8 vers la roue réceptrice 21. Ces deux presseurs mobiles 54 sont actionnés alternativement, pour former les parties des créneaux qui restent à l'extérieur des encoches 48.

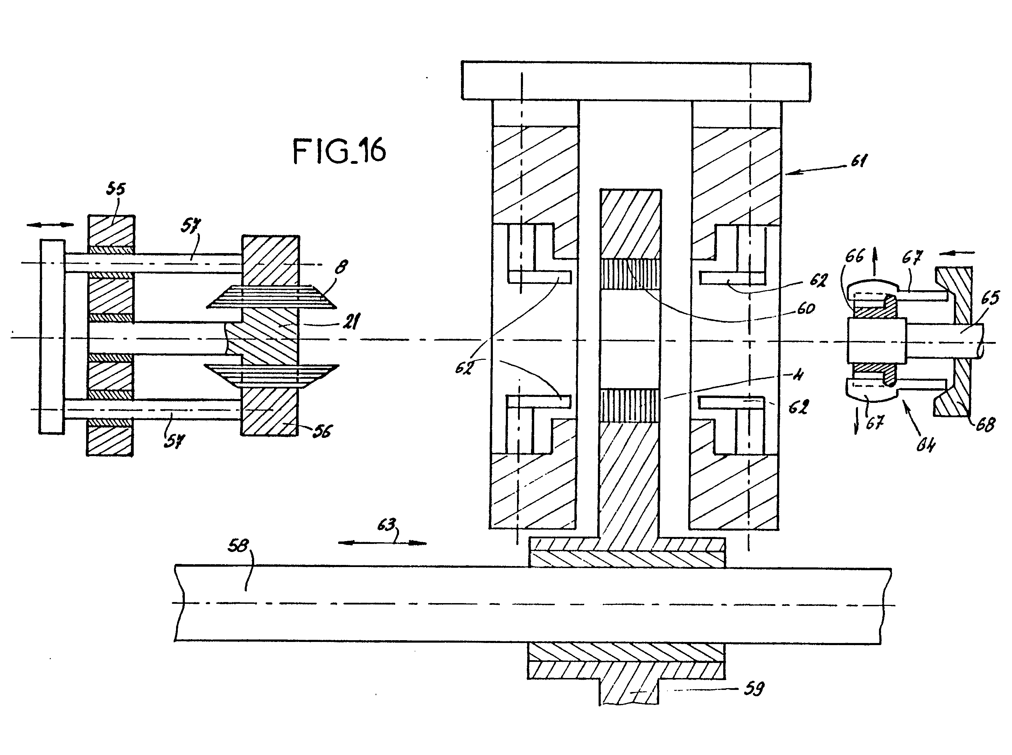

Lorsque la roue réceptrice 21 est garnie d'un tronçon de fil 8 complet, un manipulateur 55 visible à la figure 16 éloigne cette roue réceptrice 21 de la zone de transfert précitée. Le manipulateur 55 est réalisable sous la forme d'un bras oscillant prévu pour porter deux roues réceptrices, de manière à pouvoir, simultanément, amener une autre roue de reprise non garnie de fil. Pour chaque roue réceptrice 21, le manipulateur 55 comporte une coiffe 56 pourvue d'une ouverture circulaire, et supportée par des colonnes 57 guidées en coulissement, de telle sorte que la coiffe 56 peut soit entourer la roue réceptrice 21 pour guider le fil parvenant sur cette roue, soit être éloignée de la roue réceptrice 21, ce qui est nécessaire pour le transfert final du fil vers l'empilage de tôles 4 du stator.

La figure 16 indique, schématiquement, les moyens qui permettent de transférer successivement, vers l'empilage de tôles 4 du stator, trois tronçons de fil similaires 8 qui constitueront, respectivement, les trois enroulements de phases du stator. Ces moyens comprennent un arbre 58 portant un plateau circulaire rotatif 59, pourvu de plusieurs ouvertures 60 aptes à recevoir, chacune, un empilage de tôles 4. Sur le côté de l'arbre 58 est disposé un mécanisme 61 muni d'organes expulseurs 62 disposés en couronne, de part et d'autre du plateau 59. L'ensemble formé par le plateau 59 et par le mécanisme 61 est déplaçable en translation, de manière à décrire un mouvement de va-et-vient selon la flèche 63, qui la rapproche ou l'éloigne du manipulateur 55. Lors du mouvement de rapprochement, la roue réceptrice 21 garnie du tronçon de fil 8 s'engage dans l'empilage de tôles 4 porté par le plateau 59 et convenablement positionné angulairement, la coiffe 56 s'effaçant lorsque la roue réceptrice 21 pénètre dans l'empilage de tôles 4. Les organes expulseurs 62 sont alors actionnés, et ils décrivent un mouvement rectangulaire au cours duquel ils s'introduisent axialement dans les encoches 48 de la roue réceptrice 21 puis sont déplacés radialement de manière à extraire les parties de fil logées dans les encoches 48 de la roue réceptrice 21 et à faire pénétrer ces parties de fil dans les encoches du stator, placées en correspondance.

Le plateau tournant 59 permet, après transfert du fil par le mécanisme 61, d'amener le stator à d'autres postes de travail où peuvent être réalisés, successivement : un compactage des nappes de fils en direction des fonds d'encoches du stator, une mise en place de cales de fermeture d'encoches, et une évacuation des stators terminés. Le résultat du transfert final du fil, et du compactage éventuel, réalisés successivement pour chaque enroulement de phase, est un stator avec têtes de bobines étalées en nappes, et avec fils rangés à l'intérieur des encoches, comme illustré par les figures 3 à 5.

Sur la figure 16, à droite, sont représentés des moyens particuliers 64 utilisables, en association avec les organes expulseurs 62, pour réaliser le compactage. Sur un arbre-support central 65 est monté un mandrin 66, présentant à sa périphérie des fentes qui reçoivent, chacune, une lame profilée basculante 67. L'arbre 65 porte encore un plateau 68 mobile axialement, qui présente une paroi tronconique coopérant avec les extrémités des lames 67. Après transfert d'un enroulement de phase dans l'empilage de tôles 4, et si cet enroulement de phase nécessite un compactage, les moyens 64 qui viennent d'être décrits sont approchés et, par un déplacement axial du plateau 68, les lames 67 sont basculées de manière à agir sur le fil et obtenir que ce fil reste correctement en place à l'intérieur des encoches.

## Revendications

1. Procédé de bobinage d'un stator de machine tournante électrique de relativement petite puissance, telle qu'alternateur équipant un véhicule automobile, avec un bobinage du type "ondulé" dans lequel il est prévu un rangement des fils de tous les enroulements de phase (1,2,3) dans les têtes de bobines, c'est-à-dire les parties des enroulements de phases (1,2,3) situées hors des encoches (5), ces parties formant des nappes étalées (7) avec fils rangés côte à côte, et/ou dans les parties des enroulements de phase (1,2,3) situées à l'intérieur des encoches (5), ces dernières parties se présentant comme plusieurs couches superposées de fils parallèles juxtaposés, le procédé comportant une formation préalable du bobinage hors du stator, suivie d'une mise en place de ce bobinage dans les encoches (5) du stator, caractérisé en ce que, successivement :

   - hors du stator, on conforme en "zig-zag" un fil électriquement conducteur (17), en réalisant sur le fil des "créneaux" ayant des hauteurs (H) croissantes ou décroissantes et des largeurs (l, L) prédéterminées,
   - on sectionne ce fil (17) en tronçons (8) dont la longueur correspond à celle d'un enroulement de phase (1,2,3) du stator,
   - on enroule chaque tronçon de fil (8), en plusieurs tours, sur un support provisoire (21), en superposant les créneaux de hauteurs (H) croissantes ou décroissantes,
   - on introduit le support provisoire (21) dans l'empilage de tôles (4) du stator, et on transfère le tronçon de fil (8) depuis ce support provisoire (21) vers les encoches (5) du stator.

2. Procédé de bobinage d'un stator selon la revendication 1, caractérisé en ce que le fil électriquement conducteur (17) est conformé avec des séries successives de créneaux, chaque série comprenant des créneaux en nombre (N) prédéterminé ayant tous la même hauteur, et la hauteur (H1, H2,..., Hn) des créneaux étant croissante ou décroissante d'une série à la suivante.

3. Procédé de bobinage d'un stator selon la revendication 2 , caractérisé en ce que la différence de hauteur des créneaux entre deux séries successives est, de chaque côté, sensiblement égale à l'épaisseur (e) du fil (17).

4. Procédé de bobinage d'un stator selon l'une quelconque des revendications 1 à 3, caractérisé en ce que le fil électriquement conducteur (17) est conformé avec des groupes successifs de créneaux (10 à 15) ayant des largeurs de créneaux (I, L) distinctes, déterminées de telle manière que les parties de fils soient exactement juxtaposées dans chacune des couches de fils superposées prenant place finalement dans les encoches (5) du stator.

5. Procédé de bobinage d'un stator selon la revendication 4, dans lequel chaque couche de fils est formée avec deux parties de fil juxtaposées dans chaque encoche (5), caractérisé en ce qu'on forme successivement, pour l'obtention de chaque couche, un premier groupe de créneaux de hauteur déterminée et de largeur (I) légèrement inférieure à l'entraxe (E) de deux encoches (5) consécutives destinées à une même phase, puis un deuxième groupe de créneaux de même hauteur que la précédente mais de largeur (L) légèrement supérieure à l'entraxe (E) précité, ou vice-versa, de telle sorte que les deux portions de fil (10,11 ; 12,13 ; 14,15), correspondant respectivement à ces deux groupes de créneaux, suivent des trajets parallèles, sans croisement.

6. Procédé de bobinage d'un stator selon la revendication 5, caractérisé en ce que la largeur (I) des créneaux de l'un des deux groupes est sensiblement égale à l'entraxe (E) précité diminué de l'épaisseur (e) du fil, tandis que la largeur (L) des créneaux de l'autre groupe est sensiblement égale à l'entraxe (E) précité augmenté de l'épaisseur (e) du fil.

7. Procédé de bobinage d'un stator selon l'une quelconque des revendications 1 à 6, caractérisé en ce que les tronçons de fils (8) correspondant aux différentes phases (1,2,3) sont insérés successivement dans les encoches (5) du stator, toujours par l'intermédiaire d'un support provisoire (21), en réalisant éventuellement un compactage du fil en fond d'encoches.

8. Dispositif pour la mise en oeuvre du procédé de bobinage selon l'une quelconque des revendications 1 à 7 , caractérisé en ce qu'il comprend, en combinaison :
   - des moyens d'amenée (16) du fil électriquement conducteur (17) à conformer ;
   - des moyens (18) pour la conformation de ce fil (17) en "zig-zag", formant des créneaux de hauteurs (H) croissantes ou décroissantes et de largeurs (I,L) prédéterminées ;
   - des moyens de coupe (19) du fil (17) conformé en "zig-zag", pour sa séparation en tronçons (8) dont la longueur correspond à celle d'un enroulement de phase (1,2,3) ;
   - des moyens (20) pour la reprise de chaque tronçon de fil coupé (8) et pour son enroulement en plusieurs tours sur une roue réceptrice (21) constituant pour ce tronçon de fil (8) un support provisoire ;
   - des moyens (55,61) pour l'introduction de la roue réceptrice (21), garnie d'un tronçon de fil (8), à l'intérieur de l'empilage de tôles (4) du stator, et pour le transfert du tronçon de fil (8) depuis la roue réceptrice (21) vers les encoches (5) du stator.

9. Dispositif selon la revendication 8, caractérisé en ce que les moyens pour la conformation du fil (17) en "zig-zag" comprennent essentiellement une chaîne sans fin (18) liée à des moyens d'entraînement pas à pas (26), les maillons (28) de cette chaîne sans fin (18) comportant sur leurs faces extérieures des gabarits (30) sensiblement rectangulaires dont l'ensemble correspond à la totalité des créneaux à réaliser pour la formation d'un enroulement de phase (1,2,3), des moyens (31 à 36) étant prévus pour appliquer le fil (17) contre les bords de ces gabarits (30) au fur et à mesure de l'amenée du fil (17) vers ladite chaîne sans fin (18).

10. Dispositif selon la revendication 9, caractérisé en ce que chaque maillon (28) de la chaîne sans fin (18) comporte un gabarit unique (30), correspondant à un créneau à réaliser, la chaîne sans fin (18) possédant toutefois une zone inactive (43), permettant de passer de la formation d'un enroulement de phase à la formation de l'enroulement de phase suivant en laissant, entre deux enroulements successifs, une certaine longueur de fil sans créneaux (44).

11. Dispositif selon la revendication 9 ou 10, caractérisé en ce qu'il comprend, dans la zone où le fil (17) est amené vers la chaîne sans fin (18), et de part et d'autre de cette chaîne (18), un premier galet formeur (31) déplaçable perpendiculairement au sens d'avance (27) de la chaîne (18), et un second galet formeur (32) déplaçable parallèlement au sens d'avance (27) de la chaîne (18).

12. Dispositif selon l'ensemble des revendications 10 et 11 , caractérisé en ce que l'arrivée du fil (17) vers la chaîne sans fin (18) s'effectue dans une zone de changement de direction de cette chaîne (18), de telle sorte que pendant la formation d'un créneau sur un gabarit (30) porté par un maillon (28) de la chaîne sans fin (18), le maillon suivant (28') de cette chaîne (18) forme un angle par rapport au plan du maillon précédent (28), et permet ainsi le libre passage des galets formeurs (31) qui coopèrent alors avec le gabarit (30) du maillon précédent (28).

13. Dispositif selon l'une quelconque des revendications 9 à 12, caractérisé en ce que les moyens d'amenée (16) du fil (17) à conformer en "zig-zag" comprennent une pince mobile (40), déplaçable alternativement, qui est serrée sur le fil (17) et déplacée vers l'avant en coïncidence avec chaque avance incrémentale de la chaîne sans fin (18) entraînée pas à pas.

14. Dispositif selon l'une quelconque des revendications 8 à 13, caractérisé en ce que les moyens pour la reprise de chaque tronçon de fil coupé (8) et pour son enroulement sur une roue réceptrice (21) comprennent, d'une part, des guides (45) pour une amenée tangentielle des tronçons de fil (8) vers la roue réceptrice (21) et, d'autre part, des moyens (46) pour l'entraînement en rotation de ladite roue réceptrice (21).

15. Dispositif selon la revendication 14, caractérisé en ce que des presseurs mobiles (54) sont disposés de part et d'autre de la zone où les tronçons de fil (8) atteignent la roue réceptrice (21).

16. Dispositif selon l'une quelconque des revendications 8 à 15, caractérisé en ce que la roue réceptrice (21) possède un diamètre extérieur légèrement inférieur au diamètre intérieur du stator à bobiner, et une épaisseur sensiblement égale à celle du stator à bobiner, la périphérie de cette roue réceptrice (21) étant pourvue d'encoches (48) dont le pas circonférentiel correspond au pas des encoches (5) affectées à l'une des phases (1,2,3) du stator à bobiner, tandis que la profondeur des encoches (48) de la roue réceptrice (12) est prévue de manière à permettre l'empilage, à l'intérieur de ces encoches (48), de toutes les spires du tronçon de fil (8) enroulé en plusieurs tours sur cette roue réceptrice (21).

17. Dispositif selon la revendication 16, caractérisé en ce que les encoches (48) de la roue de reprise (21) possèdent une forme symétrique par rapport à un plan médian perpendiculaire à l'axe (50) de cette roue réceptrice (21), avec de part et d'autre du plan médian des parties (52) s'élargissant de préférence selon un profil en "V" et débouchant (en 53), respectivement, sur les deux faces d'extrémités (49) de ladite roue réceptrice (21).

18. Dispositif selon la revendication 17, caractérisé en ce que les parties élargies (52) des encoches (48) de la roue réceptrice (21) possèdent, sur les faces d'extrémité (49) de cette roue (21), des débouchés avec un contour ovale ou en forme de poire ou de goutte (53).

19. Dispositif selon l'une quelconque des revendications 8 à 18, caractérisé en ce que les moyens pour l'introduction de la roue réceptrice (21), garnie d'un tronçon de fil (8), à l'intérieur de l'empilage de tôles (4) du stator, et pour le transfert du tronçon de fil (8) depuis la roue réceptrice (12) vers les encoches (5) du stator, comprennent un manipulateur (55), tel qu'à bras oscillant, et un mécanisme (61) pourvu d'organes expulseurs (62) animés d'un mouvement rectangulaire.

20. Dispositif selon la revendication 19 caractérisé en ce que le manipulateur comporte, pour chaque roue réceptrice (21), une coiffe (56) pourvue d'une ouverture circulaire, pouvant entourer la roue réceptrice (21) ou être éloignée de cette roue réceptrice, tandis que le mécanisme précité (61) comprend, de part et d'autre d'un plateau rotatif (59) recevant l'empilage de tôles (4) du stator, des organes expulseurs (62) disposés en couronne, l'ensemble formé par le plateau (59) et par le mécanisme (61) étant déplaçable en translation pour être rapproché ou éloigné du manipulateur (55), de telle sorte que lors du mouvement de rapprochement, la roue réceptrice (21) garnie du tronçon de fil (8) s'engage dans l'empilage de tôles (4) porté par le plateau (59), tandis que la coiffe (56) s'efface.

**Claims**

1. A method of winding a stator for a rotary electrical machine of relatively low power, for example an alternator for a motor vehicle, having a winding of the stitched type in which the wires of all the phase windings (1, 2, 3) are arranged in a layered configuration in the heads of the windings, that is to say in those portions of the phase windings (1, 2, 3) that are situated outside the slots (5), the said portions constituting flattened layers (7) in which the wires are arranged side by side, and/or in the portions of the phase windings (1, 2, 3) that are situated within the slots (5), these latter portions being in the form of a plurality of superimposed layers of juxtaposed, parallel wires, the method comprising pre-forming the winding outside the stator, followed by fitting of the said winding in the slots (5) of the stator, characterised in that, successively:

   - an electrically conductive wire (17) is fashioned into a zigzag configuration outside the stator, by forming on the wire bights having increasing and decreasing heights (H) and predetermined widths (I, L),
   - the said wire (17) is cut into sections (8) the length of which corresponds to that of a phase winding (1, 2, 3) of the stator,
   - each section of wire (8) is wounded in a plurality of turns on a temporary support (21), by superimposing the bights having increasing or decreasing heights (H),
   - the temporary support (21) is introduced into the stack of laminations (4) of the stator, and the section of wire (8) is transferred from the said temporary support (21) to the slots (5) of the stator.

2. A method of winding a stator according to Claim 1, characterised in that the electrically conductive wire (17) is configured with successive series of bights, each series comprising a predetermined number (N) of bights all having the same height, and the height (H1, H2, ... Hn) of the bights increasing or decreasing from one series to the next.

3. A method of winding a stator according to Claim 2, characterised in that the difference in height of the bights between two successive series is, on each side, substantially equal to the thickness (e) of the wire (17).

4. A method of winding a stator according to any one of Claims 1 to 3, characterised in that the electrically conductive wire (17) is configured with successive groups of bights (10 - 15), having different bight widths (I, L) which are chosen in such a way that the portions of the wires are exactly juxtaposed in each of the layers of superimposed wires finally located in the slot (5) of the stator.

5. A method of winding a stator according to Claim 4, in which each layer of wires is formed with two portions of wire juxtaposed in each slot (5), characterised in that, to obtain each layer, there are successively formed a first group of bights having a predetermined height and a width (I) which is slightly smaller than the pitch (E) between two consecutive slots (5) appropriate to a given phase, and then a second group of bights, of the same height as the foregoing but having a width (L) slightly greater than the said pitch (E) or vice versa, in such a way that both wire portions (10, 11; 12, 13; 14, 15), corresponding respectively to the said two groups of bights, follow parallel paths without expansion.

6. A method of winding a stator according to Claim 5, characterised in that the width (I) of the bights of one of the two groups is substantially equal to the said pitch (E) reduced by the thickness (e) of the wire, while the width (L) of the bights of the other group is substantially equal to the said pitch (E) augmented by the thickness (e) of the wire.

7. A method of winding a stator according to any one of Claims 1 to 6, characterised in that the sections of wire (8) corresponding to the different phases (1, 2, 3) are inserted successively in the slots (5) of the stator, always by means of a temporary support (21), with the wire being optionally compacted in the base of the slots.

8. Appparatus for carrying out the method of winding according to any one of Claims 1 to 7, characterised in that it comprises, in combination:

   - guide means (16) for the electrically conductive wire (17) that is to be shaped;
   - means (18) for configuring the said wire (17) in a zigzag form, by forming bights having increasing or decreasing heights (H) and predetermined widths (I, L);
   - cutting means (19) for cutting the wire (17) that has been formed into a zigzag configuration, so as to separate it into sections (8) the length of which corresponds to that of one phase winding (1, 2, 3);

- means (20) for taking up each section of cut wire (8) and for winding it in a plurality of turns on a receptor wheel (21) constituting a temporary support for the said section of wire (8);
- means (55, 61) for introducing the receptor wheel (21), carrying a section of wire (8), into the stack of laminations (4) of the stator, and for transferring the section of wire (8) from the receptor wheel (21) to the slots (5) of the stator.

9. Apparatus according to Claim 8, characterised in that the means for forming the wire (17) into a zigzag configuration comprise essentially an endless chain (18) which is coupled to stepwise drive means (26), with the links (28) of the said endless chain (18) having on their outer faces substantially rectangular templates (30), which together correspond to all of the bights to be formed in order to constitute one phase winding (1, 2, 3), and means (31 - 36) being provided for applying the wire (17) against the edges of the said templates (30) progressively as the wire (17) is fed on to the said endless chain (18).

10. Apparatus according to Claim 9, characterised in that each link (28) of the endless chain (18) includes a single template (30), corresponding to one of the bights that is to be formed, but with the endless chain (18) having an inactive zone (43) for permitting transition from the formation of one phase winding to the formation of the next following phase winding by leaving, between two successive windings, a predetermined length of wire (44) which is without bights.

11. Apparatus according to Claim 9 or Claim 10, characterised in that it includes, in the zone in which the wire (17) is led towards the endless chain (18), and on either side of the said chain (18), a first forming roll (31) which is displaceable at right angles to the direction of advance (27) of the chain (18), and a second forming roll (32) which is displaceable parallel to the direction of advance (27) of the chain (18).

12. Apparatus according to Claims 10 and 11 in combination, characterised in that the wire (17) is introduced to the endless chain (18) in a zone in which the said chain (18) changes direction, in such a way that during the formation of a bight on a template (30) carried by a link (28) of the endless chain (18), the next following link (28') of the said chain (18) defines an angle with respect to the plane of the preceding link (28), and thus permits free passage of the forming rolls (31) which then cooperate with the template (30) of the preceding link (28).

13. Apparatus according to any one of Claims 9 to 12, characterised in that the guide means (16) for the wire (17) which is to be conformed into a zigzag configuration comprise a movable clamp (14) displaceable in two directions, which is clamped on the wire (17) and displaced forwardly in simultaneous movement with each incremental advance of the endless chain (18) driven in stepwise motion.

14. Apparatus according to any one of Claims 8 to 13, characterised in that the means for taking up each section of cut wire (8) and for winding it on a receptor wheel (21) comprise, firstly, guides (45) for leading the sections of wire (8) tangentially to the receptor wheel (21), and secondly means (46) for driving the said receptor wheel (21) in rotation.

15. Apparatus according to Claim 14, characterised in that movable pressing members (54) are arranged on either side of the zone in which the sections of wire (8) reach the receptor wheel (21).

16. Apparatus according to any one of Claims 8 to 15, characterised in that the receptor wheel (21) has an outer diameter which is slightly smaller than the inner diameter of the stator to be wound, and a thickness which is substantially equal to that of the stator to be wound, the periphery of the said receptor wheel (21) being provided with slots (48), the circumferential pitch of which corresponds to the pitch of the slots (5) appropriate to one of the phases (1, 2, 3) of the stator to be wound, while the depth of the slot (48) in the receptor wheel (21) is so selected as to enable all of the turns of the section of wire (8) which is wound in a plurality of turns on the said receptor wheel (21), to be stacked in the said slots (48).

17. Apparatus according to Claim 16, characterised in that the slots (48) of the take-up wheel (21) have a shape which is symmetrical with respect to a median plane that is perpendicular to the axis (50) of the said receptor wheel (21), with, on either side of the median plane, divergent portions (52) which are preferably of V-shaped profile and which terminate (at 53), respectively, in open ends on the two end faces (49) of the said receptor wheel (21).

18. Apparatus according to Claim 17, characterised in that the divergent portions (52) of the slots (48) of the receptor wheel (21) have, on the end faces (49) of the said wheel (21), open ends (53) having an oval contour being in the shape of a pear or raindrop.

19. Apparatus according to any one of Claims 8 to 18, characterised in that the means for introducing the receptor wheel (21), carrying a section of wire (8) into the stack of laminations (4) of the stator, and for transferring the section of wire (8) from the receptor wheel (21) to the slots (5) of the stator, comprise a manipulator (55), such as an oscillating arm, and a mechanism (61) which is provided with stripping members (62) which are actuated in a rectangular movement.

20. Apparatus according to Claim 19, characterised in that the manipulator includes, for each receptor wheel (21), a head piece (56) having a circular opening and arranged to surround the receptor wheel (21) or to be spaced away from the said receptor wheel, while the said mechanism (61) includes, on either side of a rotatable plate (59) for receiving the stack of laminations (4) of the stator, stripping members (62) disposed in crown-like configuration, with the assembly comprising the plate (59) and the mechanism (61) being displaceable in translational movement so as to be moved towards or away from the manipulator (55), in such a way that during its movement towards the latter, the receptor wheel (21) carrying the section of wire (8) engages in the stack of laminations (4) carried by the plate (59), while the head piece (56) is retracted.

## Patentansprüche

1. Wickelverfahren für Ständer von elektrischen Maschinen, wie z.B. Kraftfahrzeug-Wechselstromgeneratoren, mit "gewellter" Wicklung, wobei eine Anordnung der Drähte sämtlicher Phasenwicklungen (1, 2, 3) in den Spulenköpfen, d.h. den außerhalb der Einschnitte (5) liegenden Teilen der Phasenwicklungen (1, 2, 3) vorgesehen ist, während diese Teile abgestufte Bündel (7) mit nebeneinander angeordneten Drähten bilden, und/oder in den im Innern der Einschnitte (5) liegenden Teile der Phasenwicklungen (1, 2, 3), wobei diese letzteren Teile mehrere übereinanderliegende Lagen parallel verlaufender und aneinander angrenzender Drähte bilden, und wobei das verfahren eine Vorabwicklung außerhalb des Ständers beinhaltet, gefolgt von dem Einsetzen dieser Wicklung in die Einschnitte (5) des Ständers, **dadurch gekennzeichnet,** daß folgende Schritte nacheinander ablaufen:
   - Außerhalb des Ständers wird ein elektrisch leitender Draht (17) zickzackförmig ausgebildet, indem am Draht "Spitzen" mit zunehmenden oder abnehmenden Höhen (H) sowie festgelegte Breiten (l, L) ausgeführt werden,
   - dieser Draht (17) wird in Abschnitte (8) zerschnitten, deren Länge derjenigen einer Phasenwicklung (1, 2, 3) des Ständers entspricht,
   - jeder Drahtabschnitt (8) wird in mehreren Windungen um eine provisorische Stütze (21) gewickelt, indem die Spitzen von zunehmender oder abnehmender Höhe (H) übereinander gelegt werden,
   - die provisorische Stütze (21) wird in das Blechpaket (4) des Ständers eingeführt und der Drahtabschnitt (8) wird von dieser provisorischen Stütze (21) zu den Einschnitten (5) am Ständer geführt.

2. Wickelverfahren für Ständer nach Anspruch 1, **dadurch gekennzeichnet,** daß der elektrisch leitende Draht (17) mit aufeinanderfolgenden Serien von Spitzen ausgebildet ist, wobei jede Serie Spitzen in einer festgelegten Anzahl (N) enthält, die alle die gleiche Höhe haben, und wobei die Höhe (H1, H2, ..., Hn) der Spitzen von einer Serie zur anderen zunimmt oder abnimmt.

3. Wickelverfahren für Ständen nach Anspruch 2, **dadurch gekennzeichnet,** daß die Höhendifferenz der Spitzen zwischen zwei aufeinanderfolgenden Serien auf jeder Seite im wesentlichen gleich der Dicke (e) des Drahts (17) ist.

4. Wickelverfahren für Ständer nach einem der Ansprüche 1 bis 3, **dadurch gekennzeichnet,** daß der elektrisch leitende Draht (17) mit aufeinanderfolgenden Gruppen von Spitzen (10 bis 15) ausgebildet ist, die unterschiedliche Spitzenbreiten (l, L) aufweisen, welche so festgelegt werden, daß die Drahtteile in jeder der übereinanderliegenden Drahtlagen, die schließlich in die Einschnitte (5) am Ständer eingelegt werden, nebeneinanderliegen.

5. Wickelverfahren für Ständer nach Anspruch 4, bei dem jede Drahtlage mit zwei in jedem Einschnitt (5) nebeneinanderliegenden Drahtteilen ausgebildet ist, **dadurch gekennzeichnet,** daß zur Herstellung jeder Lage nacheinander eine erste Gruppe von Spitzen mit festgelegter Höhe und einer Breite (l), die etwas geringer ist als der Mittenabstand (E) von zwei für die gleiche Phase bestimmten aufeinanderfolgenden Einschnitten (5), und anschließend eine zweite Gruppe von Spitzen mit gleicher Höhe wie die vorgenannte, jedoch mit einer etwas größeren Breite (L) als der vorgenannte Mittenabstand (E) oder umgekehrt gebildet werden, so daß die beiden Drahtteile (10, 11; 12, 13; 14, 15), die jeweils diesen beiden Gruppen von Spitzen entsprechen, parallel und ohne Überkreuzung verlaufen.

6. Wickelverfahren für Ständer nach Anspruch 5, **dadurch gekennzeichnet,** daß die Breite (l) der Spitzen der einen der beiden Gruppen im wesentlichen gleich dem vorgenannten Mittenabstand (E), vermindert um die Dicke (e) des Drahts ist, während die Breite (L) der Spitzen der anderen Gruppe im wesentlichen gleich dem vorgenannten Mittenabstand (E), erhöht um die Dicke (e) des Drahts, ist.

7. Wickelverfahren für Ständer nach einem der Ansprüche 1 bis 6, **dadurch gekennzeichnet,** daß die den verschiedenen Phasen (1, 2, 3) entsprechenden Drahtabschnitte (8) nacheinander in die Einschnitte (5) des Ständers eingesetzt werden, und zwar immer mit Hilfe einer provisorischen Vorrichtung (21), wobei eventuell eine Verdichtung des Drahts am Boden der Einschnitte vorgenommen wird.

8. Vorrichtung für die Anwendung des Wickelverfahrens nach einem der Ansprüche 1 bis 7, **dadurch gekennzeichnet,** daß sie in Kombination folgendes enthält:
   - Mittel zur Zuführung (16) des umzuformenden elektrisch leitfähigen Drahts (17),
   - Mittel (18) zur Umformung dieses Drahts (17) in "Zickzackform" unter Bildung von Spitzen mit zunehmender oder abnehmender Höhe (H) und festgelegter Breite (l, L),
   - Mittel zum Abschneiden (19) des zickzackförmigen Drahts (17) zwecks Unterteilung in Abschnitte (8), deren Länge derjenigen einer Phasenwicklung (1, 2, 3) entspricht,
   - Mittel (20) für die Aufnahme jedes abgeschnittenen Drahtstücks (8) und für dessen Wicklung in mehreren Windungen auf ein Aufnahmerad (21), welches für diesen Drahtabschnitt (8) als provisorische Stütze dient,
   - Mittel (55, 61) für die Einführung des Aufnahmerads (21), versehen mit einem Drahtabschnitt (8), in das Innere des Blechpakets (4) des Ständers und für die Bewegung des Drahtabschnitts (8) vom Aufnahmerad (21) zu den Einschnitten (5) im Ständer.

9. Vorrichtung nach Anspruch 8, **dadurch gekennzeichnet,** daß die Mittel zur zickzackförmigen Ausbildung des Drahts (17) im wesentlichen eine Endloskette (18) einschließen, die mit Schrittschaltmitteln (26) verbunden ist, wobei die Glieder (28) dieser Endloskette (18) an den Außenflächen Schablonen (30) aufweisen, die im wesentlichen rechteckig sind und die als Gesamtheit sämtlichen Spitzen entspricht, welche zur Bildung einer Phasenwicklung (1, 2, 3) herzustellen sind, während Mittel (31 bis 36) für das Anlegen des Drahts (17) an die Kanten dieser Schablonen (30) entsprechend der Drahtzuführung (17) zur genannten Endloskette (18) vorgesehen sind.

10. Vorrichtung nach Anspruch 9, **dadurch gekennzeichnet,** daß jedes Glied (28) der Endloskette (18) eine einzige Schablone (30) aufweist, die einer herzustellenden Spitze entspricht, wobei die Endloskette (18) jedoch eine inaktive Zone (43) besitzt, die den Übergang von der Ausbildung einer Phasenwicklung zur Ausbildung der nachfolgenden Phasenwicklung gestattet, während zwischen zwei aufeinanderfolgenden Wicklungen eine bestimmte Drahtlänge ohne Spitzen (44) verbleibt.

11. Vorrichtung nach Anspruch 9 oder 10, **dadurch gekennzeichnet,** daß sie in der Zone, wo der Draht (17) der Endloskette (18) zugeführt wird, beiderseits dieser Kette (18) eine erste Formrolle (31) enthält, die lotrecht zur Vorschubrichtung (27) der Kette (18) verschiebbar ist, sowie eine zweite Formrolle (32), die parallel zur Vorschubrichtung (27) der Kette (18) verschiebbar ist.

12. Vorrichtung nach der Gesamtheit der Ansprüche 10 und 11, **dadurch gekennzeichnet,** daß die Zuführung des Drahts (17) zur Endloskette (18) in einer Zone der Richtungsänderung dieser Kette (18) vonstatten geht, so daß während der Ausbildung einer Spitze an einer Schablone (30), die auf einem Glied (28) der Endloskette (18) aufliegt, das nachfolgende Glied (28') dieser Kette (18) einen Winkel zur Ebene des vorherigen Glieds (28) bildet und somit den freien Durchgang der Formrollen (31) ermöglicht, die dann mit der Schablone (30) des vorherigen Glieds (28) zusammenwirken.

13. Vorrichtung nach einem der Ansprüche 9 bis 12, **dadurch gekennzeichnet,** daß die Mittel zur Zuführung (16) des zickzackförmig auszubildenden Drahts (17) eine bewegliche Zange (40) einschließen, die abwechselnd verschiebbar ist und die am Draht (17) gespannt und entsprechend der schrittweise angetriebenen Endloskette (18) nach vorn verschoben wird.

14. Vorrichtung nach einem der Ansprüche 8 bis 13, **dadurch gekennzeichnet,** daß die Mittel für die Aufnahme jedes abgeschnittenen Drahtabschnitts (8) und für dessen Aufwicklung auf ein Aufnahmerad (21) einerseits Führungen (45) für eine tangentiale Zuführung der Drahtabschnitte (8) zum Aufnahmerad (21) hin und andererseits Mittel (46) für die Drehung des genannten Aufnahmerads (21) enthalten.

15. Vorrichtung nach Anspruch 14, **dadurch gekennzeichnet,** daß die beweglichen Druckrollen (54) beiderseits der Zone angeordnet sind, wo die Drahtabschnitte (8) das Aufnahmerad (21) erreichen.

16. Vorrichtung nach einem der Ansprüche 8 bis 15, **dadurch gekennzeichnet,** daß das Aufnahmerad (21) einen Außendurchmesser aufweist, der etwas geringer ist als der Innendurchmesser des zu wickelnden Ständers, und eine Dicke, die im wesentlichen derjenigen des zu wickelnden Ständers entspricht, wobei die Peripherie dieses Aufnahmerads (21) mit Einschnitten (48) versehen ist, deren Umfangsteilung der Teilung der Einschnitte (5) entspricht, die einer der Phasen (1, 2, 3) des zu wickelnden Ständers zugeordnet sind, während die Tiefe der Einschnitte (48) des Aufnahmerads (12) so vorgesehen ist, daß im Innern dieser Einschnitte (48) alle Windungen des Drahtabschnitts (8), der in mehreren Windungen auf dieses Aufnahmerad (21) gewickelt ist, übereinander geschichtet werden können.

17. Vorrichtung nach Anspruch 16, **dadurch gekennzeichnet,** daß die Einschnitte (48) des Aufnahmerads (21) eine symmetrische Form im Verhältnis zu einer Mittelebene lotrecht zur Achse (50) dieses Aufnahmerads (21) besitzen, wobei beiderseits der Mittelebene Teile (52) vorhanden sind, die sich vorzugsweise entsprechend einem V-förmigen Profil erweitern und die (bei 53) in die beiden Endflächen (49) des genannten Aufnahmerads (21) einmünden.

18. Vorrichtung nach Anspruch 17, **dadurch gekennzeichnet,** daß die erweiterten Teile (52) der Einschnitte (48) des Aufnahmerads (21) an den Endflächen (49) dieses Rads (21) Öffnungen mit ovaler oder birnenförmiger oder tropfenförmiger Kontur (53) aufweisen.

19. Vorrichtung nach einem der Ansprüche 8 bis 18, **dadurch gekennzeichnet,** daß die Mittel für die Einführung des Aufnahmerads (21), versehen mit einem Drahtabschnitt (8), in das Innere des Blechpakets (4) des Ständers und für die Bewegung des Drahtabschnitts (8) vom Aufnahmerad (12) zu den Einschnitten (5) des Ständers einen Manipulator (55), wie z.B. in Schwinghebelausführung, und einen Mechanismus (61) enthalten, der mit Ausstoßorganen (62) mit Rechteckbewegung versehen ist.

20. Vorrichtung nach Anspruch 19, **dadurch gekennzeichnet,** daß der Manipulator für jedes Aufnahmerad (21) eine mit kreisförmiger Öffnung versehene Abdeckung (56) aufweist, die das Aufnahmerad (21) umschließen oder von diesem Aufnahmerad entfernt werden kann, während der vorgenannte Mechanismus (61) beiderseits einer Drehscheibe (59) zur Aufnahme des Blechpakets (4) des Ständers Ausstoßorgane (62) enthält, die kranzförmig angeordnet sind, wobei die aus der Scheibe (59) und dem Mechanismus (61) bestehende Einheit mittels translatorischer Bewegung dem Manipulator (55) angenähert oder von diesem entfernt werden kann, so daß bei der Annäherungsbewegung das mit dem Drahtabschnitt (8) versehene Aufnahmerad (21) in das auf der Scheibe (59) aufliegende Blechpaket (4) eingreift, während die Abdeckung (56) rückgestellt wird.

FIG_1

FIG_2

FIG_3

FIG_4

FIG_5

FIG.6

FIG.7

# FIG.8

# FIG.9

FIG.10

FIG.11

FIG.12

20

FIG.13

FIG.14

FIG.15

FIG.16